# EUROPÄISCHE PATENTSCHRIFT

(11) **EP 1 453 754 B1**
(45) Veröffentlichungstag und Bekanntmachung des Hinweises auf die Patenterteilung: **15.03.2006**
(21) Anmeldenummer: 02737793.6
(22) Anmeldetag: 15.04.2002
(51) Int. Cl.: B66C 13/16, G01V 5/00, G01N 23/04

(54) **VORRICHTUNG UND VERFAHREN ZUR BERÜHRUNGSLOSEN LADUNGSKONTROLLE AN KRANANLAGEN**
DEVICE AND METHOD FOR THE CONTACTLESS LOAD CONTROL OF CRANE SYSTEMS
DISPOSITIF ET PROCEDE DE CONTROLE DE CHARGE SANS CONTACT SUR DES INSTALLATIONS DE GRUTAGE

(30) Priorität: 12.12.2001 DE 10160928
(43) Veröffentlichungstag der Anmeldung: 08.09.2004
(73) Patentinhaber: Noell Mobile Systems & Cranes GmbH, 97080 Würzburg (DE)
(72) Erfinder: FRANKE, Klaus-Peter, 97337 Dettelbach (DE)
(74) Vertreter: Lüdtke, Frank
(86) Internationale Anmeldenummer: PCT/DE2002/001386
(87) Internationale Veröffentlichungsnummer: WO 2003/053840

(56) Entgegenhaltungen:
- DE-A- 19 826 560
- US-A- 5 638 420
- US-A- 5 838 759

## Beschreibung

Die Erfindung betrifft eine Vorrichtung zur berührungslosen Ladungskontrolle an Krananlagen entsprechend dem Oberbegriff des ersten Patentanspruches und ein Verfahren zum Betreiben der Vorrichtung.

Vorrichtungen zum Durchleuchten von Stückgut sind bekannt und funktionieren in der Regel auf der Basis von Röntgen- oder Gammastrahlen. Sie werden benutzt, um das Gepäck von Passagieren auf geeignete Weise zu durchleuchten und um festzustellen, ob gefährliche Gegenstände im Transportbehälter vorhanden sind. Durchleuchtungsvorgänge und Vorrichtungen, um größere Transportbehälter, wie Container, zu durchleuchten, sind ebenfalls bekannt. Es handelt sich dabei um größere Einheiten, von denen Strahlungen durch einen Container oder einen Transportbehälter gesandt werden, um zu überwachen, ob Gegenstände und Vorrichtungen, für die ein Transport nicht vorgesehen ist, im Container befindlich sind. Das ist insbesondere an Stellen der Fall, an denen sich Container oder größere Transportbehältnisse im grenzüberschreitenen Verkehr befinden, insbesondere Container, die mit Lastkraftwagen, Flugzeugen oder Schiffen in andere Länder transportiert werden. Problematisch an derartigen Vorrichtungen, die sich am Boden befinden ist, dass ein Transportmittel mit dem Container die Vorrichtung durchfahren muss, was voraussetzt, dass eine entsprechende Abschirmung für den Fahrer oder in der Nähe befindliche Personen vorhanden sein muss. Insbesondere ist ein gesonderter Umlade- oder Transportvorgang erforderlich, um einen entsprechenden Container durchleuchten zu können. Derartige Methoden sind besonders dann nicht anwendbar, wenn eine große Anzahl von Containern schnell be- und entladen werden soll, da eine lange Standzeit für die Container oder eine lange Liegezeit für Schiffe in Häfen nicht möglich ist.

Aus US 5,638,420 ist eine Vorrichtung gemäß dem Oberbegriff des Anspruchs 1 bekannt, mit der Container von oben durchleuchtet werden, indem ein Fahrzeug mit Kabine den Container überfährt und ein Durchleuchten vornimmt. Aus DE 198 26 560 A1 geht eine Vorrichtung zur Überprüfung des Inhaltes geschlossener Ladungsträger, insbesondere Container, unter Verwendung von Röntgenstrahlen hervor, mit der Container mittels einer an einem Fahrzeug angeordneten Durchleuchtungseinrichtung seitlich durchleuchtet werden.

Beide Vorrichtungen haben den Nachteil, dass nur einzelne Container und auch erst nach dem Absetzen durch den Kran durchleuchtbar sind und hierzu eine gesonderte Vorrichtung, die den Container überfahren muss, erforderlich ist.

Es ist daher Aufgabe der Erfindung, eine Vorrichtung und ein Verfahren zur berührungslosen Ladungskontrolle zu entwickeln, mit der Container, insbesondere Container, die von Schiffen entladen werden, z. B. während des Entladungsvorganges, schnell und sicher durchleuchtet werden können, ohne dass eine unmittelbare Gefährdung von Personen auftritt.

Diese Aufgabe wird durch eine Vorrichtung nach den kennzeichnenden Merkmalen des ersten Patentanspruches und ein Verfahren zum Betreiben der Vorrichtung gelöst.

Unteransprüche geben vorteilhafte Ausgestaltungen der Erfindung wieder.

Die erfindungsgemäße Lösung sieht eine Vorrichtung zur berührungslosen Ladungskontrolle an Krananlagen, vorzugsweise Containerkrananlagen mittels Durchleuchtung während der Be- und Entladung von Transportfahrzeugen vor, wobei am Kran selbst eine Durchleuchtungseinrichtung zur berührungslosen Kontrolle des Transportbehälters angeordnet ist. Als Transportbehälter kommen Container unterschiedlicher Größe in Frage. Die Durchleuchtung kann auf zweierlei Art erfolgen. Entweder befindet sich der Transportbehälter in Reihe, d. h. dann wird dieser mittels einer beweglichen Sende- und Empfangseinheit abgescannt, oder aber der Transportbehälter wird durch die Durchleuchtungseinrichtung hindurchbewegt, so dass Sende- und Empfangseinheit stationär angeordnet sind. Die Durchleuchtungseinrichtung kann auf der Basis von Röntgen- oder Gammastrahlung funktionieren.

Das Bedienpersonal des Kranes ist, sofern der Bedienstand in der Nähe der Durchleuchtungseinrichtung angeordnet ist, durch eine entsprechende Abschirmung geschützt, die zwischen dem Stand des Bedienpersonals und der Durchleuchtungseinrichtung angeordnet ist.

Für das Anordnen der Durchleuchtungseinrichtung am Kran sind unterschiedliche Orte am Kran vorgesehen. Zum Einen ist es vorteilhaft, die Durchleuchtungseinrichtung unterhalb der Katze anzuordnen, so dass der Transportbehälter nach der Entnahme aus dem Transportmittel die Durchleuchtungseinrichtung beim Aufheben durchfährt und bereits in dieser Phase entschieden werden kann, ob das Stückgut weitertransportiert wird oder die Entladung unterbleibt.

Eine andere Variante sieht vor, dass die Durchleuchtungseinrichtung an oder auf der Katze angeordnet ist und mit dieser mitfährt. Das hat den Vorteil, dass ein längeres Durchleuchten des Transportbehälters während der Fahrt entlang des Kranauslegers und somit eine intensivere Betrachtung des Ladegutes möglich ist. Der entladene Container kann dann, sofern er auffällig geworden ist, auf einen besonderen Stapel oder Lagerplatz zur Kontrolle abgesetzt werden.

Eine weitere Variante sieht vor, dass die Durchleuchtungseinrichtung unbeweglich am Kranarm oder der Kranbrücke angeordnet ist und die Katze mit dem Transportbehälter und der Ladeeinrichtung die Durchleuchtungseinrichtung durchfährt. Bei der Variante, bei der der Behälter während der Katzfahrt die unbeweglich am Kranarm angebrachte Durchleuchtungseinrichtung durchfährt, bietet es sich an, den Behälter um 90° zu drehen, um die Durchleuchtung von der Längsseite aus durchführen zu können.Damit ist ein kurzes Durchleuchten des Transportbehälters möglich, wonach entschieden werden kann, ob der Transportbehälter bestimmungsgemäß weitergeführt wird oder z. B. zu einer intensiveren Kontrolle an einem besonderen Standort abzulegen ist.

Eine weitere vorteilhafte Ausgestaltung der Erfindung sieht vor, die Durchleuchtungsvorrichtung im Bereich der landseitigen Stahlkonstruktion des Kranes anzuordnen. Damit besteht die Möglichkeit, den Transportbehälter oder den Container beim Absenken auf ein Lager oder ein weiteres Transportfahrzeug zu kontrollieren. Für die Anordnung einer derartigen Vorrichtung auf der landseitigen Stahlkonstruktion bestehen zwei Möglichkeiten. Zum Einen kann der abzusenkende Transportbehälter einen starr oder beweglichen Schacht oder einen Trichter durchfahren, in dem die Durchleuchtung durchgeführt wird, zum Anderen ist es möglich, den Transportbehälter auf der Stahlkonstruktion in der Durchleuchtungseinrichtung abzusetzen, zu durchleuchten und dann für den weiteren Transport oder dem Absenken auf ein Transportfahrzeug freizugeben.

Mit einer derartigen Ladungskontrolle an Kraneinheiten bzw. mit einer derartigen Durchleuchtungseinrichtung sind herkömmliche Krane problemlos nachrüstbar. Die Überwachung der Durchleuchtungseinrichtung und die Kontrolle der Transportbehälter kann in sicherem Abstand vom Kran erfolgen, wobei die Durchleuchtungseinrichtung mit der Steuerung des Kranes in der Weise gekoppelt sein kann, dass nach dem erfolgten Durchleuchtungsvorgang entschieden wird, wohin das durchleuchtete Gut transportiert wird.

Die erfindungsgemäße Vorrichtung hat den Vorteil, dass Transportbehälter beim Be- und Entladungsvorgang schnell und sicher durchleuchtet werden können, wobei unmittelbar nach dem Durchleuchtungsvorgang ohne einen weiteren Arbeitsgang entschieden werden kann, ob der Transportbehälter seiner weiteren Bestimmung, dem Weitertransport, zugeführt wird, eine intensivere Kontrolle erfolgen soll oder die Annahme des Behälters sogar verweigert werden soll.

Im Folgenden wird die Erfindung an vier Figuren und einem Ausführungsbeispiel, welches eine Krananlage zum Entladen von Schiffen und ein Beladen von Lkw betrifft, erläutert. Die Figuren zeigen:
- Figur 1:: Containerkrananlage zum Entladen von Schiffen und Beladen von Kraftfahrzeugen, bei der die Durchleuchtungseinrichtung unterhalb der Katze angeordnet ist und auf dem Kranausleger mitfährt.
- Figur 2:: Krananlage mit zwei Hubkatzen und einer Transferkatze, wobei sich die Durchleuchtungseinrichtung auf der Transferkatze befindet.
- Figur 3:: Krananlage, bei der die Durchleuchtungseinrichtung starr an der Brücke des Kranes angeordnet ist und von der Katze mit dem zu kontrollierenden Stückgut durchfahren wird. (Container um 90° gedreht)
- Figur 4:: Containerkran, bei dem die Durchleuchtungseinrichtung im Bereich der landseitigen Konstruktion beweglich angeordnet ist.

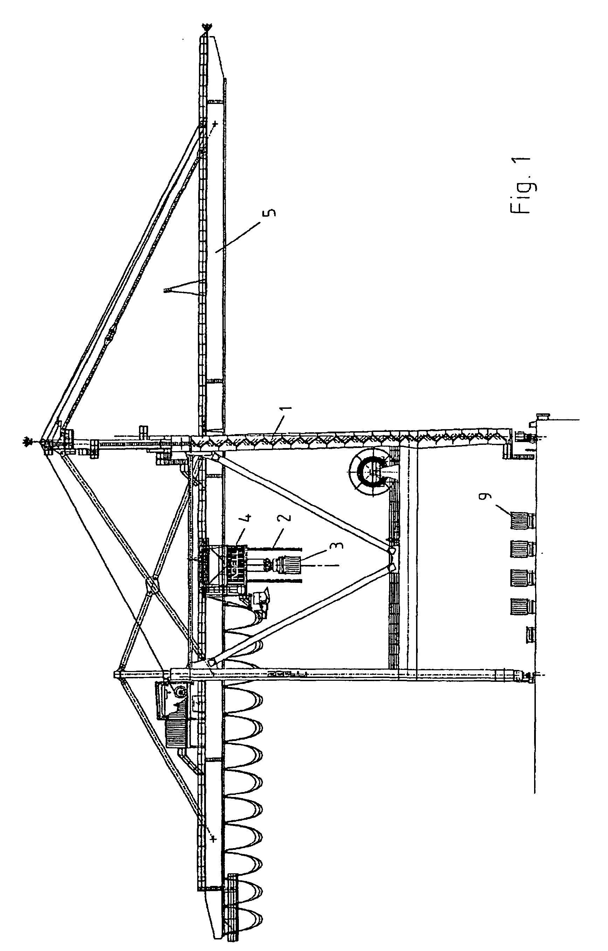

Die Figur 1 zeigt einen Containerkran 1 zum Entladen von Schiffen mit einer Katze 4, unter der sich ein Container 3 befindet, der von einer Durchleuchtungseinrichtung 2 umgeben ist. Die Durchleuchtungseinrichtung 2 verfährt mit dem Container 3 entlang dem Ausleger 5, wobei die Verfahrzeit genutzt wird, um den Container 3 zu durchleuchten. Der Container 3 wird dann auf das Kai oder Transportfahrzeuge abgesetzt.

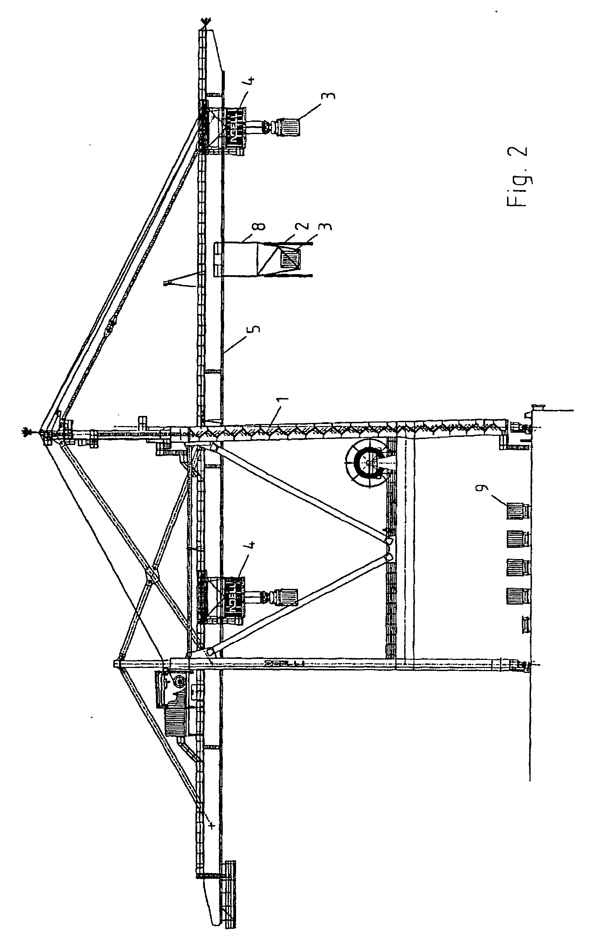

Die Figur 2 zeigt eine Krananlage 1 mit zwei Katzen 4 und einer Transferkatze 8, wobei sich die Durchleuchtungseinrichtung 2 an der Transferkatze befindet.

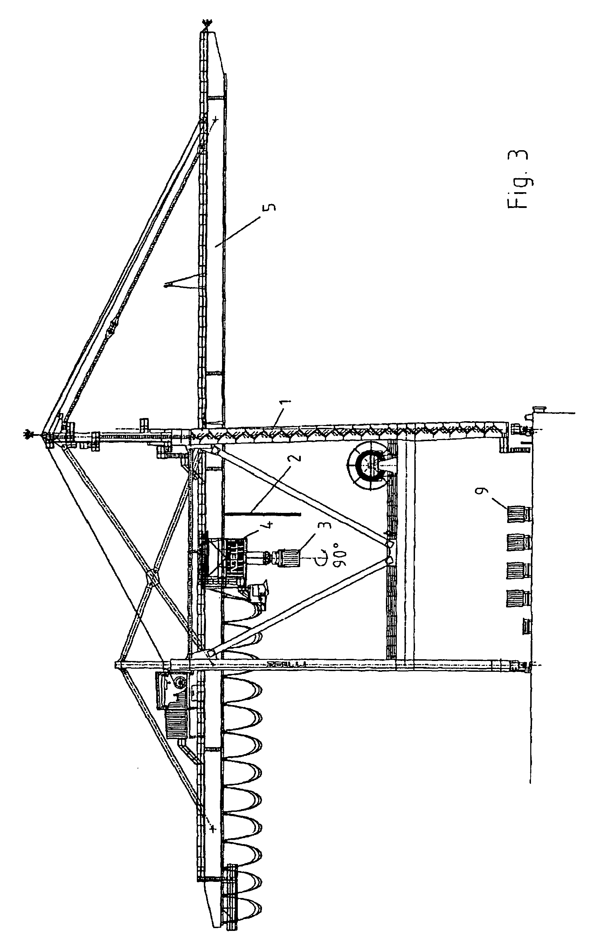

Die Figur 3 zeigt einen Kran 1 mit Ausleger und Kranbrücke 5, wobei auf der Kranbrücke 5 eine Durchleuchtungseinrichtung 2 angeordnet ist, die vom Transportbehälter 3 unter der Katze 4 durchfahren wird. Drehung des Behälters um 90°.

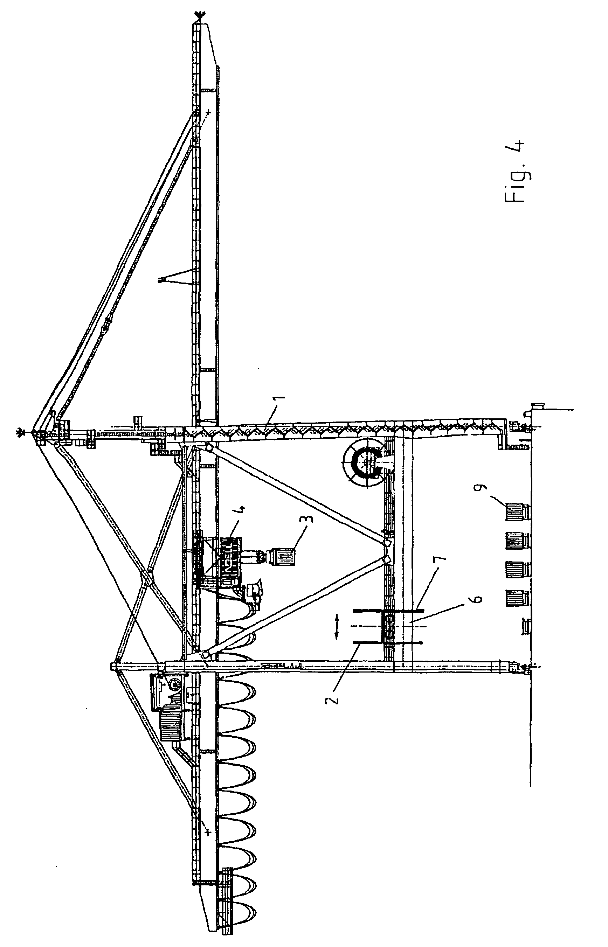

Die Figur 4 zeigt einen Kran 1 mit einer Katze 4, unter der sich ein Container 3 befindet, bei dem sich die Durchleuchtungseinrichtung 2 im landseitigen Bereich der Stahlkonstruktion 6 befindet. Im vorliegenden Fall ist die Durchleuchtungseinrichtung 2 trichterförmig und horizontal verfahrbar auf dem Querträger der Stahlkonstruktion 6 so angeordnet, dass er z. B. über das zu beladende Kraftfahrzeug 9 verfahrbar ist. Damit kann die Durchleuchtungseinrichtung 2 vom abgesenkten Transportbehälter 3 durchfahren und durchleuchtet werden, wonach ein Absetzen auf dem Kai oder dem Kraftfahrzeug 9 erfolgt.

Die vorgeschlagenen Varianten der Erfindung haben den Vorteil, dass ein schnelles Durchleuchten von Transportbehältern unmittelbar während des Transportes am Kran erfolgen kann, so dass kein zusätzlich zeitlicher, organisatorischer und apparativer Aufwand für die Kontrolle der Transportbehälter 3 erforderlich ist.

### Liste der verwendeten Bezugszeichen

- 1: Kran
- 2: Durchfeuchtungseinrichtung
- 3: Transportbehälter, Container
- 4: Katze (Hubkatze)
- 5: Ausleger/Kranbrücke
- 6: Landseitiger Bereich der Stahlkonstruktion
- 7: Trichter oder Führungsschacht, horizontal beweglich
- 8: Transferkatze
- 9: Kraftfahrzeug, z. B. Lkw, Zug oder Stellplatz

## Patentansprüche

1. Vorrichtung zur berührungslosen Ladungskontrolle an Krananlagen, vorzugsweise für Containerkrananlagen mittels Durchleuchtung während der Be- und Entladung von Transportfahrzeugen, **dadurch gekennzeichnet, dass** am Kran (1) eine Durchleuchtungseinrichtung (2) zur berührungslosen Kontrolle des Transportbehälters (3) angeordnet ist, die der/die Transportbehälter (3) durchfährt/durchfahren.

2. Vorrichtung nach Anspruch 1, **dadurch gekennzeichnet, dass** die Durchleuchtungseinrichtung (2) unterhalbloberhalb der Katze (4) angeordnet ist.

3. Vorrichtung nach den Ansprüchen 1 und 2, **dadurch gekennzeichnet, dass** die Durchleuchtungseinrichtung (2) so angeordnet ist, dass sie mit der Katze (4) oder (8) verfährt.

4. Vorrichtung nach Anspruch 1, **dadurch gekennzeichnet, dass** die Durchleuchtungseinrichtung (2) am Ausleger bzw. an der Kranbrücke (5) im Bereich der Katzfahrbahn so angeordnet ist, dass sie vom zu transportierenden Stückgut (3) durchfahren wird.

5. Vorrichtung nach Anspruch 1,**dadurch gekennzeichnet, dass** die Durchleuchtungseinrichtung (2) starr im Bereich der landseitigen Stahlkonstruktion (6) des Kranes (1) so angeordnet ist, dass sie vom zu transportierenden Stückgut (3) durchfahren wird.

6. Vorrichtung nach Anspruch 1, **dadurch gekennzeichnet, dass** die Durchleuchtungseinrichtung (2) beweglich im Bereich der landseitigen Stahlkonstruktion (6) des Kranes (1) so angeordnet ist, dass sie vom zu transportierenden Stückgut (3) durchfahren wird.

7. Vorrichtung nach einem der Ansprüche 1 bis 6, **dadurch gekennzeichnet, dass** die Durchleuchtungseinrichtung (2) an einem Mehr - Katz - Kran angeordnet ist.

8. Verfahren zum Betreiben einer Vorrichtung nach einem der Ansprüche 1 bis 7, **dadurch gekennzeichnet, dass** das Durchleuchten eines Transportbehälters (3) sowohl während des Hub- , Senk- oder des Katzfahrtvorganges als auch während eines Zwischenabstellens auf der Konstruktion (6) des Kranes (1) stattfindet und im Ergebnis des Durchleuchtungsvorganges entschieden wird, ob das durchleuchtete Stückgut (3) zu seinem Ausgangsort zurück, aussortiert oder zum weiteren Transport umgeschlagen wird.

## Claims

1. An apparatus for contactless cargo load control on crane systems, preferably for container lifting crane systems, by means of radiation scanning during loading and unloading of transport vehicles, **characterized in that** a radiation scanning unit (2) for contactless control of the shipment box (3) is mounted to the crane (1), the shipment box(es) (3) being moved therethrough.

2. The apparatus as claimed in claim 1, wherein the radiation scanning unit (2) is mounted beneath/above the trolley (4).

3. The apparatus as claimed in the claims 1 and 2, wherein the radiation scanning unit (2) is mounted so as to be carried along by the trolley (4) or (8).

4. The apparatus as claimed in claim 1, wherein the radiation scanning unit (2) is mounted to the jib or to the crane bridge (5) in the region of the trolley's travel path in such a manner that the piece good (3) to be transported is moved therethrough.

5. The apparatus as claimed in claim 1, wherein the radiation scanning unit (2) is rigidly mounted in the region of the land-side steel construction (6) of the crane (1) in such a manner that the piece good (3) to be transported is moved therethrough.

6. The apparatus as claimed in claim 1, wherein the radiation scanning unit (2) is movably mounted in the region of the land-side steel construction (6) of the crane (1) in such a manner that the piece good (3) to be transported is moved therethrough.

7. The apparatus as claimed in any of the claims 1 through 6, wherein the radiation scanning unit (2) is mounted to a multiple-trolley crane.

8. A method of operating an apparatus as claimed in any one of the claims 1 through 7, wherein a shipment box (3) is inspected both during hoisting or lowering thereof or during the trolley's travel and during temporary storage of the box on the construction (6) of the crane (1) and wherein, as a result of the radiation scanning operation, a decision is taken as to whether the inspected piece good (3) is returned to its original site, is cast out or transshipped for further transport.

## Revendications

1. Dispositif pour contrôler sans contact, par radioscopie, le poids de chargement de grues, de préférence de grues conteneurs, pendant le chargement et le déchargement de véhicules de transport, **caractérisé en ce qu'**un appareil de radioscopie (2) pour contrôler sans contact le conteneur de transport (3) est disposé sur la grue (1), le ou les conteneur(s) de transport (3) étant passés au travers de cet appareil.

2. Dispositif selon la revendication 1, **caractérisé en ce que** l'appareil de radioscopie (2) est disposé en dessous/au dessus du chariot (4).

3. Dispositif selon les revendications 1 et 2, **caractérisé en ce que** l'appareil de radioscopie (2) est monté de telle sorte qu'il se déplace avec le chariot (4) ou (8).

4. Dispositif selon la revendication 1, **caractérisé en ce que** l'appareil de radioscopie (2) est monté sur la flèche ou sur le pont (5) de la grue dans la région du chemin emprunté par le chariot de telle sorte que les colis (3) destinés à être transportés sont passés au travers de cet appareil.

5. Dispositif selon la revendication 1, **caractérisé en ce que** l'appareil de radioscopie (2) est monté fixe dans la région de la structure en acier (6) de la grue (1) située du côté terre de telle sorte que les colis (3) destinés à être transportés sont passés au travers de cet appareil.

6. Dispositif selon la revendication 1, **caractérisé en ce que** l'appareil de radioscopie (2) est monté mobile dans la région de la structure en acier (6) de la grue (1) située du côté terre de telle sorte que les colis (3) destinés à être transportés sont passés au travers de cet appareil.

7. Dispositif selon l'une quelconque des revendications 1 à 6, **caractérisé en ce que** l'appareil de radioscopie (2) est monté sur une grue comportant plusieurs chariots.

8. Procédé destiné à faire fonctionner un dispositif selon l'une quelconque des revendications 1 à 7, **caractérisé en ce que** l'on passe un conteneur de transport (3) à la radioscopie tant pendant le levage, l'abaissement ou le déplacement du chariot que pendant qu'il se trouve temporairement déposé sur la structure (6) de la grue (1) et que l'on décide, à partir du résultat de la radioscopie, si le colis (3) passé à la radioscopie est retourné à son emplacement initial, rejeté ou transbordé pour son transport ultérieur.
